# EUROPEAN PATENT APPLICATION

(11) **EP 4 663 479 A1**
(43) Date of publication of application: **17.12.2025**
(21) Application number: 24181756.8
(22) Date of filing: 12.06.2024
(51) Int. Cl.: B60Q 1/28, B60Q 1/32

(54) **SAFETY SYSTEM FOR A VEHICLE**

(71) Applicant: VOLVO TRUCK CORPORATION, 405 08 Göteborg (SE)
(72) Inventor: NALLET, Sébastien, 38460 Venerieu (FR); RIBERO, Raphaël, 69390 Millery (FR)
(74) Representative: Germain Maureau

(57) **Abstract**

A safety system (10) configured for use on a vehicle (100), the safety system including a projection device (60a, 60b) configured to project an image onto a surface surrounding a vehicle to indicate movement of a vehicle part (20, 40) of the vehicle and a control unit (200) configured to operate the projection device to project a first image (80a) indicating a first extent of movement of the vehicle part and a second image (80b) indicating a second extent of movement of the vehicle part.

## Description

### TECHNICAL FIELD

The disclosure relates generally to a safety system configured for use on a vehicle. In particular aspects, the disclosure relates to a safety system configured for use on a vehicle to warn approaching drivers, cyclists, pedestrians, and the like of a potentially hazardous condition. The disclosure may relate to heavy-duty vehicles, such as trucks, buses, and/or construction equipment, among other vehicle types. However, although the disclosure may be described with respect to a particular vehicle, the disclosure is not restricted to any particular vehicle.

### BACKGROUND

Extension of a door of a vehicle into a path of an approaching driver, cyclist, pedestrian, and/or the like (hereafter, referred to as an "approaching roadway user) causes an obstruction of the path of the approaching roadway user. Additionally, for a vehicle including a passenger compartment configured to tilt to provide access to an engine bay of the vehicle, such as a tractor unit of a semi-trailer truck, extension of the passenger compartment tilting into a path of the approaching roadway user causes an obstruction of the path of the approaching roadway user.

Without an appropriate safety system used to warn the approaching roadway user of the imminent or current obstruction caused by the door and/or the passenger compartment of the vehicle extending into the path of the approaching roadway user, the obstruction creates a potentially hazardous condition for the approaching roadway user, as well as a driver of the vehicle. For example, obstruction caused by the door and/or the passenger compartment of the vehicle extending into the path of the approaching roadway user may cause a collision between the approaching roadway user and the door and/or the passenger compartment of the vehicle.

Currently available safety systems either only indicate an imminent obstruction caused by the door of the vehicle extending into the path of the approaching roadway user or only indicate a current obstruction caused by the door of the vehicle extending into the path of approaching roadway user. Further, currently available safety systems do not consider imminent or current obstructions caused by extension of the passenger compartment of the vehicle tilting into the path of the approaching roadway user.

It is desirable to provide a safety system configured for use on a vehicle that is configured to warn an approaching roadway user of an imminent and current obstruction, of a path of the approaching roadway user, by a door and/or passenger compartment of the vehicle extending into the path of the approaching roadway user.

### SUMMARY

According to aspects of the disclosure a safety system configured for use on a vehicle is provided. The safety system includes a projection device configured to project an image onto a surface surrounding a vehicle to indicate movement of a vehicle part of the vehicle and a control unit configured to operate the projection device to project a first image indicating a first extent of movement of the vehicle part and a second image indicating a second extent of movement of the vehicle part.

According to aspects of the disclosure, the first extent of movement of the vehicle part may correspond to a maximum extension of the vehicle part.

According to aspects of the disclosure, the second extent of movement of the vehicle part may correspond to an actual extension of the vehicle part.

According to aspects of the disclosure, the control unit may be configured to operate the projection device to update projection of the second image continuously.

According to aspects of the disclosure, the control unit may be configured to operate the projection device to project the first image upon a detection of a first instance of movement of the vehicle part and to project the second image upon a detection of a second instance of movement of the vehicle part.

According to aspects of the disclosure, the first instance of movement of the vehicle part may correspond to a likelihood of movement of the vehicle part and the second instance of movement of the vehicle part may correspond to a change in position of the vehicle part.

According to aspects of the disclosure, the vehicle part may be a door of the vehicle.

According to aspects of the disclosure, the first extent of movement and the second extent of movement of the vehicle part may correspond to an extension of the vehicle part during one or more of an opening action and a closing action of the vehicle part.

According to aspects of the disclosure, the projection device may be configured to project the first image and the second image onto a surface located at a side of the vehicle.

According to aspects of the disclosure, the projection device may be configured to be arranged on a side exterior of the vehicle.

According to aspects of the disclosure, the vehicle part may be a passenger compartment of the vehicle.

According to aspects of the disclosure, the first extent of movement and the second extent of movement of the vehicle part correspond to an extension of the vehicle part during a tilting action of the vehicle part.

According to aspects of the disclosure, the projection device may be configured to project the first image and the second image onto a surface located at a front of the vehicle.

According to aspects of the disclosure, the projection device may be configured to be arranged on a front exterior of the vehicle.

According to aspects of the disclosure, the first image may include one or more of a first color and a first pattern and the second image may include one or more of a second color and a second pattern.

According to aspects of the disclosure, a vehicle comprising the safety system according to any aspect disclosed herein is provided. The the vehicle includes a first vehicle part and a second vehicle part.

According to aspects of the disclosure, the control unit may be configured to operate the projection device to project the first image indicating the first extent of movement of the first vehicle part and the second image indicating the second extent of movement of the second vehicle part.

According to aspects of the disclosure, the second vehicle part may be configured to tilt in a forward direction.

According to aspects of the disclosure, the control unit may be configured to operate the projection device to project the first image indicating the first extent of movement of the second vehicle part and the second image indicating the second extent of movement of the second vehicle part.

According to aspects of the disclosure, a method of indicating movement of a vehicle part of a vehicle is provided. The method includes providing the safety system according to any aspect disclosed herein, projecting the first image indicating the first extent of movement of the vehicle part at a first instance of movement of the vehicle part, and projecting the second image indicating the second extent of movement of the vehicle part at a second instance of movement of the vehicle part.

In the manner described and according to aspects illustrated herein, the safety system configured for use on a vehicle, the vehicle including the safety system, and the method of indicating movement of one or more part of a vehicle are capable of warning an approaching roadway user of an imminent and current obstruction, of a path of the approaching roadway user, by a door and/or passenger compartment of the vehicle extending into the path of the approaching roadway user.

The disclosed aspects, examples (including any preferred examples), and/or accompanying claims may be suitably combined with each other as would be apparent to a person having ordinary skill in the art. Additional features and advantages are disclosed in the following description, claims, and drawings, and in part will be readily apparent therefrom to persons skilled in the art and/or recognized by practicing the disclosure as described herein.

### BRIEF DESCRIPTION OF THE DRAWINGS

Aspects of the disclosure will be described with reference to the drawings, where like numerals reflect like elements:
**FIG. 1** is a front perspective view of a safety system configured for use on a vehicle according to aspects of the disclosure;
**FIG. 2** is a side view of the safety system according to **FIG. 1****;**
**FIG. 3A** is a top view of the safety system according to **FIG. 1****,** depicting a vehicle part of the vehicle in a fully-closed position according to aspects of the disclosure;
**FIG. 3B** is a top view of the safety system according to **FIG. 1****,** depicting a vehicle part of the vehicle in the fully-closed position according to aspects of the disclosure;
**FIG. 3C** is a top view of the safety system according to **FIG. 1****,** depicting a vehicle part of the vehicle in an intermediate position according to aspects of the disclosure;
**FIG. 3D** is a top view of the safety system according to **FIG. 1****,** depicting a vehicle part of the vehicle in a fully-open position according to aspects of the disclosure;
**FIG. 4A** is a side view of the safety system according to **FIG. 1****,** depicting a vehicle part of the vehicle in a fully-closed position according to aspects of the disclosure;
**FIG. 4B** is a side view of the safety system according to **FIG. 1****,** depicting a vehicle part of the safety system in a fully-closed position according to aspects of the disclosure;
**FIG. 4C** is a side view of the safety system according to FIG. 1, depicting a vehicle part of the safety system in an intermediate position according to aspects of the disclosure; and
**FIG. 5** is a schematic representation of the safety system according to aspects of the disclosure.

### DETAILED DESCRIPTION

The detailed description set forth below provides information and examples with sufficient detail to enable those skilled in the art to practice the disclosure.

In the description, like numerals represent like parts. Although the technology disclosed herein is described with reference to specific examples, it should be understood that modifications and changes may be made to these examples without going beyond the general scope as defined by the claims. In particular, individual characteristics of the various examples shown and/or mentioned herein may be combined in additional examples. Consequently, the description and the drawings should be considered in a sense that is illustrative rather than restrictive. The Figures, which are not necessarily to scale, depict illustrative aspects and are not intended to limit the scope of the disclosure. The illustrative aspects depicted are intended only as exemplary.

The term "exemplary" is used in the sense of "example," rather than "ideal." While aspects of the disclosure are amenable to various modifications and alternative forms, specifics thereof have been shown by way of example in the drawings and will be described in detail. It should be understood, however, that the intention is not to limit aspects of the disclosure to a particular example described. On the contrary, the intention of this disclosure is to cover all modifications, equivalents, and alternatives falling within the scope of the disclosure.

Various materials, methods of construction, methods of fastening, and the like may be described in the context of disclosed examples. Those skilled in the art will recognize known substitutes for the materials, construction methods, fastening methods, and the like, all of which are contemplated as compatible with the disclosed example and are intended to be encompassed by the appended claims.

As used in this disclosure and the appended claims, the singular forms "a," "an," and "the" include plural referents, unless the content clearly dictates otherwise. As used in this disclosure and the appended claims, the term "or" is generally employed in a sense including "and/or," unless the content clearly dictates otherwise.

Throughout the description, including the claims, the terms "comprising a," "including a," and "having a" should be understood as being synonymous with "comprising one or more," "including one or more," and "having one or more" unless otherwise stated. In addition, any range set forth in the description, including the claims, should be understood as including its end value(s), unless otherwise stated. Specific values for described elements should be understood to be within accepted manufacturing or industry tolerances known to one of skill in the art, and any use of the terms "substantially," "approximately," and "generally" should be understood to mean falling within such accepted tolerances.

When an element or feature is referred to herein as being "on," "engaged to," "connected to," or "coupled to" another element or feature, it may be directly on, engaged, connected, or coupled to the other element or feature, or intervening elements or features may be present. In contrast, when an element or feature is referred to as being "directly on," "directly engaged to," "directly connected to," or "directly coupled to" another element or feature, there may be no intervening elements or features present. Other words used to describe the relationship between elements or features should be interpreted in a like manner (e.g., "between" versus "directly between," "adjacent" versus "directly adjacent," etc.).

Spatially relative terms, such as "top," "bottom," "middle," "inner," "outer," "beneath," "below," "lower," "above," "upper," and the like may be used herein for ease of description to describe one element or relationship of a feature to another element(s) or feature(s) as illustrated in the drawings. Spatially relative terms may be intended to encompass different orientations of a device in use or operation in addition to the orientation depicted in the drawings. For example, if the device in the drawings is turned over, elements described as "below" or "beneath" other elements or features would then be oriented "above" the other elements or features. Thus, the example term "below" can encompass both an orientation of above and below. The device may be otherwise oriented (rotated 90 degrees or at other orientations) and the spatially relative descriptors used herein interpreted accordingly.

Although the terms "first," "second," "third," etc. may be used herein to describe various elements, components, regions, layers, sections, and/or parameters, these elements, components, regions, layers, sections, and/or parameters should not be limited by these terms. These terms are only used to distinguish one element, component, region, layer, section, or parameter from another element, component, region, layer, section, or parameter. Thus, a first element, component, region, layer, section, or parameter discussed herein could be termed a second element, component, region, layer, section, or parameter without departing from the teachings of the present disclosure.

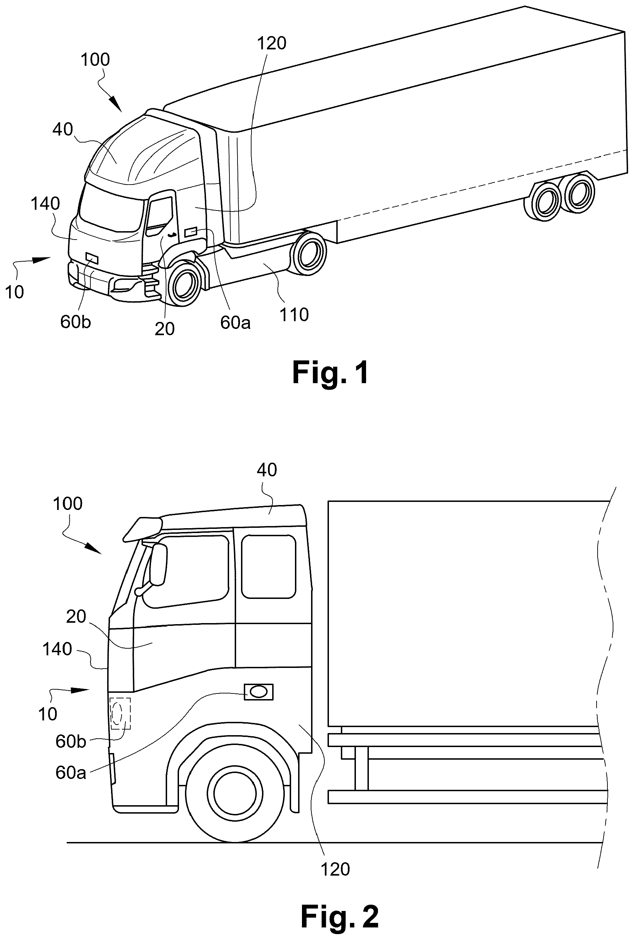

**FIGS. 1-2** show a safety system 10 (hereafter, "the system 10") configured for use on a vehicle 100. It is contemplated that the vehicle 100 to which the system 10 is configured for use on may be a heavy-duty vehicle, such as a truck, bus, and/or construction equipment, though it should be understood that the system 10 may be configured for use on other types of vehicles. In examples, the vehicle 100 may be a tractor unit of a semi-trailer truck.

Referring to **FIGS. 1-3D****,** the vehicle 100 includes one or more first vehicle part 20 configured to open and close to allow ingress and egress of a user of the vehicle 100. In examples, the first vehicle part 20 may be a door of the vehicle 100. The first vehicle part 20 may be included at a side of the vehicle 100. The terms "side," "front," "rear," "forward," and "rearward" as used herein may be understood in relation to a driving direction of the vehicle 100. It is contemplated that opening and/or closing the first vehicle part 20 includes extension of the first vehicle part 20 outward from the vehicle 100. The term "outward" as used herein may be understood as extending in a direction away from the vehicle 100. In particular, opening and/or closing the first vehicle part 20 may include extension of the first vehicle part 20 in a sideward direction from the vehicle 100. Additionally or alternatively, opening and/or closing the first vehicle part 20 includes extension of the first vehicle part 20 into a path and/or roadway (hereafter, "the path") of an approaching driver, cyclist, pedestrian, and/or the like (hereafter, referred to as an "approaching roadway user"). It is contemplated that extension of the first vehicle part 20 into the path of the approaching roadway user may cause an imminent or current obstruction of the path of the approaching roadway user and, thus, a potentially hazardous condition for the approaching roadway user and/or the user of the vehicle 100. In examples, with respect to the first vehicle part 20, it is contemplated that the path of the approaching roadway user may be at or adjacent to the side of the vehicle 100.

Referring to **FIGS. 1-2** **and** **4A-4C****,** the vehicle 100 includes a second vehicle part 40 configured to receive the user of the vehicle 100. In examples, the second vehicle part 40 may be a passenger compartment of the vehicle 100. The second vehicle part 40 may be configured to be mounted to a frame 110 of the vehicle 100 at a position above an engine (not shown) of the vehicle 100. The first vehicle part 20 may be included on the second vehicle part 40. In examples, the second vehicle part 40 may be configured to tilt to provide access to the engine and/or the frame 110 of the vehicle 100. Accordingly, it is contemplated that tilting the second vehicle part 40 may be understood as and/or referred to as the second vehicle part 40 being opened and/or closed. Additionally or alternatively, tilting the second vehicle part 40 may be understood as and/or referred to as opening and closing a bay configured to house the engine (hereafter, an "engine bay").

The second vehicle part 40 may include a tilt mechanism (not shown) including one or more of a hydraulic member, a pump member, and/or the like configured to tilt the second vehicle part 40. Tilting the second vehicle part 40 includes extension of the second vehicle part 40 outward from the vehicle 100. In particular, the second vehicle part 40 may be configured to tilt in a forward direction, extending away from the engine and/or the frame 110 of the vehicle 100. Additionally or alternatively, tilting of the second vehicle part 40 includes extension of the second vehicle part 40 into the path of the approaching roadway user. It is contemplated that extension of the second vehicle part 40 into the path of the approaching roadway user may cause an imminent or current obstruction of the path of the approaching roadway user and, thus, a potentially hazardous condition for the approaching roadway user and/or the user of the vehicle 100. In examples, with respect to the second vehicle part 40, it is contemplated that the path of the approaching roadway user may be at or adjacent to a front of the vehicle 100.

Hereafter, for structures and/or relationships that are substantially similar, the first vehicle part 20 and the second vehicle part 40 may be referred to collectively herein as "the vehicle part 20, 40," unless individual reference to the first vehicle part 20 and the second vehicle part 40 is otherwise necessary. As such, with collective reference to "the vehicle part 20, 40," it should be understood that the structures and/or relationships disclosed may apply to the first vehicle part 20 and the second vehicle part 40.

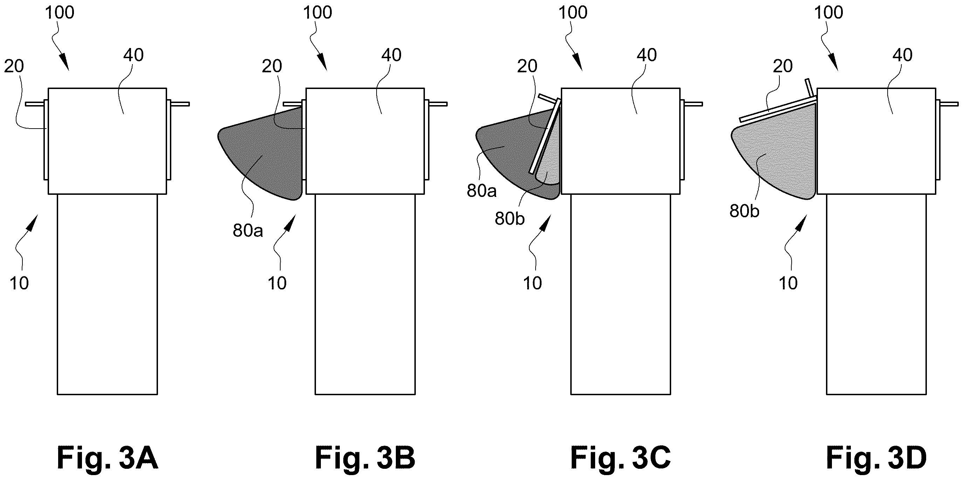

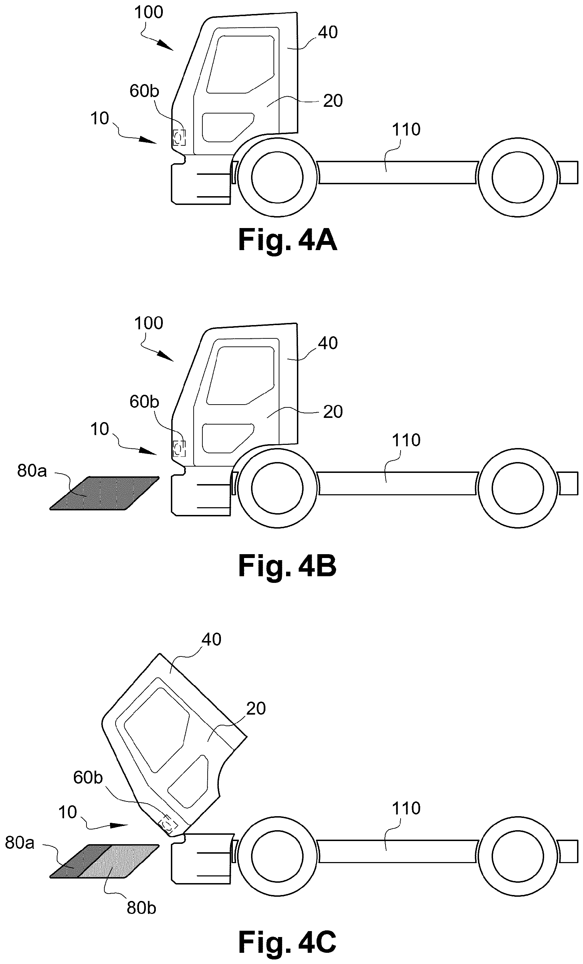

As illustrated by **FIGS. 3A-3D** **and** **4A-4C****,** the vehicle part 20, 40 is configured to be moved and/or transitioned between a fully-open position (also may be referred to herein as a "first position"), a fully-closed position (also may be referred to herein as a "second position"), and one or more intermediate position (also may be referred to herein as a "third position") between the fully-open position and the fully-closed position. The fully-open position of the vehicle part 20, 40 may correspond to a first extent of movement of the vehicle part 20, 40. The first extent of movement corresponds to a maximum extension of the vehicle part 20, 40 into the path of the approaching roadway user. The intermediate position of the vehicle part 20, 40 may correspond to a second extent of movement of the vehicle part 20, 40. The second extent of movement corresponds to an actual and/or current extension of the vehicle part 20, 40 into the path of the approaching roadway user. As such, the second extent of movement may be variable. The fully-closed position of the vehicle part 20, 40 may correspond to a third extent of movement of the vehicle part 20, 40. The third extent of movement corresponds to a minimum extension of the vehicle part 20, 40 into the path of the approaching roadway user.

It is contemplated that the vehicle part 20, 40 may include a locking member (not shown) configured to restrict and/or allow movement of the vehicle part 20, 40 between the fully-closed position and the fully-open position. The locking member may be configured to be transitioned between a locked state, which restricts movement of the vehicle part 20, 40 between the fully-closed position and the fully-open position, and an unlocked state, which allows movement of the vehicle part 20, 40 between the fully-closed position and the fully-open position. Accordingly, to move the vehicle part 20, 40 from the fully-closed position to the intermediate position and/or the fully-closed position and the fully-open position, the vehicle part 20, 40 may require the locking member to be transitioned from the locked state to the unlocked state.

As shown in **FIGS. 1-2****,** the system 10 includes one or more projection device 60a, 60b configured to project one or more image 80a, 80b onto a surface surrounding the vehicle 100. Additionally or alternatively, the projection device 60a, 60b is configured to project the one or more image 80a, 80b onto a surface of the path of the approaching roadway user. In examples, the system 10 may include a first projection device 60a corresponding to the first vehicle part 20. Additionally or alternatively, the system 10 may include a second projection device 60b corresponding to the second vehicle part 40. However, for structures and/or relationships that are substantially similar, the first projection device 60a and the second projection device 60b will be referred collectively herein as "the projection device 60a, 60b," unless individual reference to the first projection device 60a and the second projection device 60b is otherwise necessary. As such, with collective reference to "the projection device 60a, 60b," it should be understood that the structures and/or relationships disclosed may apply to the first projection device 60a and the second projection device 60b.

In examples, projection of the one or more image 60a, 60b onto the surface surrounding the vehicle 100 indicates movement of the vehicle part 20, 40 between the fully-closed position and the fully-open position. The term "image" as used herein may be understood as a visual representation of a warning signal. The one or more image 80a, 80b may be produced by a beam of light projected onto the surface surrounding the vehicle 100. The light may be projected in one or more color, pattern, text, and/or flash duration to form the one or more image 80a, 80b. As such, the projection device 60a, 60b may be an optical device (not shown) including one or more of a plurality of light-emitting diodes (LEDs), one or more laser, one or more lens, a condenser, a reflector, and/or the like configured project and direct light toward the surface surrounding the vehicle 100.

As illustrated by **FIGS. 3A-3D****,** in examples, the first projection device 60a may configured to project one or more image 80a, 80b to indicate movement of the first vehicle part 20 between the fully-closed position and the fully-open position. As such, the first projection device 60a may be configured to project the one or more image 80a, 80b onto the surface of the path of the approaching roadway user, at a location at or adjacent to the side of the vehicle 100. Additionally or alternatively, referring to **FIGS. 1-2****,** the first projection device 60a may be configured to be arranged on a side exterior portion 120 of the vehicle 100. Referring to **FIGS. 4A-4C****,** in examples, the second projection device 60b may be configured to project the one or more image 80a, 80b to indicate movement of the second vehicle part 40 between the fully-closed position and the fully-open position. As such, the second projection device 60b may be configured to project the one or more image 80a, 80b onto the surface of the path of the approaching roadway user, at a location at or adjacent to the front of the vehicle 100. Additionally or alternatively, referring to **FIGS. 1-2****,** the second projection device 60b may be configured to be arranged on a front exterior portion 140 of the vehicle 100.

As illustrated by **FIG. 3A-3D** **and** **4A-4C****,** the projection device 60a, 60b may be configured to project one or more of a first image 80a and a second image 80b onto the surface of the path of the approaching roadway user. The first image 80a and the second image 80b may be projected separately or simultaneously. In examples, the first image 80a is configured to indicate the first extent of movement of the vehicle part 20, 40. As such, the first image 80a is configured to indicate the maximum extension of the vehicle part 20, 40. The second image 80b is configured to indicate the second extent of movement of the vehicle part 20, 40. As such, the second image 80b is configured to indicate the actual and/or current extension of the vehicle part 20, 40. The second image 80b may be updated and/or reproduced continuously and/or in real-time to indicate the actual and/or current extension of the vehicle part 20, 40.

Referring to **FIGS. 3B** **and** **4B****,** the projection device 60a, 60b may be configured to project the first image 80a at a first instance of movement of the vehicle part 20, 40. It is contemplated that the first instance of movement may be detected while the vehicle part 20, 40 is in the fully-closed position. In examples, the first instance of movement may correspond to a detection of a likelihood of movement of the vehicle part 20, 40. In particular, the first instance of movement may correspond to a detection of a likelihood of initial movement of the vehicle part 20, 40. Additionally or alternatively, the first instance of movement may correspond to a likelihood that the vehicle part 20, 40 may be opened. As such, the first instance of movement may correspond to a detection of use of a handle and/or actuator (not shown) included on the vehicle part 20, 40. Additionally or alternatively, the first instance of movement may correspond to a detection of a transition of the locking member and, thus, the vehicle part 20, 40, from the locked state to the unlocked state. Additionally or alternatively, the first instance of movement may correspond to a detection of an initial movement and/or transition of the vehicle part 20, 40 from the fully-closed position toward the fully-open position. It is contemplated that the projection device 60a, 60b may be configured to maintain the first image 80a while the vehicle part 20, 40 is in the intermediate position and the fully-open position to continue to warn the approaching roadway user of the first extent of movement of the vehicle part 20, 40.

In this manner, the system 10 is configured to indicate the first extent of movement of the vehicle part 20, 40 at the first instance of movement of the vehicle part 20, 40, thereby being capable of warning the approaching roadway user of the first extent of movement of the vehicle part 20, 40 and, thus, the maximum extension of the vehicle part 20, 40, while the vehicle part 20, 40 is in the fully-closed position. Accordingly, the system 10 is configured to indicate an imminent obstruction of the path of the approaching roadway user.

Referring to **FIG. 3C-3D** **and** **4C****,** the projection device 60a, 60b may be configured to project the second image 80b at a second instance of movement of the vehicle part 20, 40. It is contemplated that the second instance of movement may be detected while the vehicle part 20, 40 is in the intermediate position or the fully-open position. In examples, the second instance of movement may correspond to any detection of movement of the vehicle part 20, 40 subsequent to a detection of the first instance of movement and/or any detection of movement of the vehicle part 20, 40 while the vehicle part 20, 40 is in the intermediate position or the fully-open position. The second instance of movement may correspond to a detection of a change in position of the vehicle part 20, 40. In particular, the second instance of movement may correspond to a detection of one or more change in position of the vehicle part 20, 40 from the fully-closed position toward the intermediate position and/or from the intermediate position toward the fully-open position. The second instance of movement may correspond to detection of a plurality of changes in position of the vehicle part 20, 40 from the fully closed-position toward the intermediate position and/or from the intermediate position toward the fully-open position. Detection of the second instance of movement may be incremental based upon an incremental change in position of the vehicle part 20, 40 or continuous based upon a continuous change in position of the vehicle part 20, 40.

In this manner, the system 10 is configured to indicate the second extent of movement of the vehicle part 20, 40 at the second instance of movement of the vehicle part 20, 40, thereby warning the approaching roadway user of the second extent of movement of the vehicle part 20, 40 and, thus, the actual and/or current extension of the vehicle part 20, 40 while the vehicle part 20, 40 is in the intermediate position or fully-open position. Accordingly, the system 10 is configured to indicate a current obstruction of the path of the approaching roadway user.

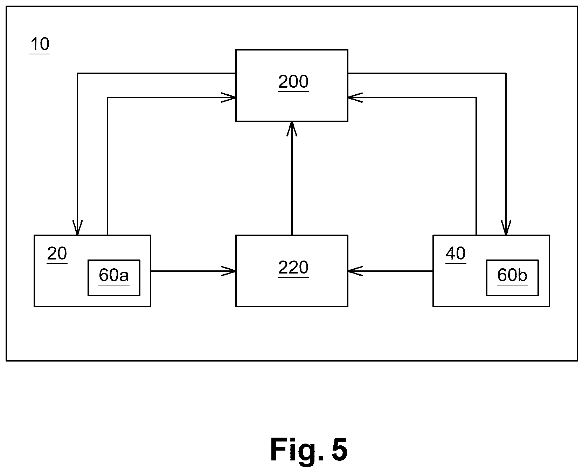

Referring to **FIG. 5****,** the vehicle 100 to which the system 10 is configured for use on may include an electronic control unit 200 (hereafter, the "ECU 200" or the "control unit 200") configured to control operation of the system 10. Additionally or alternatively, it is contemplated that the ECU 200 may be part of the system 10. The ECU 200 may be configured to receive data and/or one or more signal from the vehicle part 20, 40 and/or the system 10. Additionally or alternatively, the ECU 200 may be configured to receive data and/or one or more signal from one or more sensor 220 configured to detect the first instance of movement and the second instance of movement of the vehicle part 20, 40. It is contemplated that the sensor 220 may be considered part of and/or configured to function with systems of the vehicle 100. Additionally or alternatively, the sensor 220 may be considered part of and/or configured to function with the system 10. In examples, the system 10 and/or the vehicle 100 may include a plurality of the sensor 220, each corresponding to one or more of the first vehicle part 20 and the second vehicle part 40. However, the plurality of sensors 220 will be referred to herein as "the sensor 220," unless reference to the plurality of sensors 220 is otherwise necessary.

Data and/or the one or more signal corresponding to a detection of one or more of the first instance of movement and the second instance of movement of the vehicle part 20, 40, detected by the sensor 220, may be sent to the ECU 200. Based upon the data and/or the one or more signal corresponding to the detection of one or more of the first instance of movement and the second instance of movement, the ECU 200 may be configured to control operation of the projection device 60a, 60b and, thus, the system 10. In examples, if the first instance of movement of the vehicle part 20, 40 is detected, the ECU 200 may be configured to operate the projection device 60a, 60b to project the first image 80a. If the second instance of movement of the vehicle part 20, 40 is detected, the ECU 200 may be configured to operate the projection device 60a, 60b to project the second image 80b. Additionally or alternatively, data and/or the one or more signal corresponding to the second instance of movement of the vehicle part 20, 40 may be updated and/or received by the ECU 200 continuously, due to continued movement of the vehicle part 20, 40, such that the second image 80b and second extent of movement of the vehicle part 20, 40 is updated and/or reproduced continuously and/or in real-time.

In operation, the user of the vehicle 100 may undertake an opening action of the first vehicle part 20 by transitioning the locking member from the locked state toward the unlocked state, lifting the handle or pressing the actuator included on the first vehicle part 20, and/or initially extending the first vehicle part 20 outwardly from the side of the vehicle 100. Additionally or alternatively, the user of the vehicle 100 may undertake a tilting and/or opening action of the second vehicle part 40 by transitioning the locking member from the locked state toward the unlocked state, lifting the handle or pressing the actuator included on the second vehicle part 40, and/or initially extending the second vehicle part 40 outwardly from the front of the vehicle 100. The sensor 220 detects the opening action of the first vehicle part 20 and/or the tilting action and/or opening action of the second vehicle part 40 and, thus, the first instance of movement of the vehicle part 20, 40, and communicates the data and/or one or more signal corresponding to the first instance of movement of the vehicle part 20, 40 to the ECU 200. The ECU 200 operates the projection device 60a, 60b to project the first image 80a onto the surface of the path of the approaching roadway user to indicate the first extent of movement of the vehicle part 20, 40 to the approaching roadway user and, thus, to warn the approaching roadway user of the maximum extension of the vehicle part 20, 40 into the path of the approaching roadway user while the vehicle part 20, 40 is in the fully-closed position, the intermediate position, and/or the fully-open position.

The user of the vehicle 100 may continue to transition the vehicle part 20, 40 from the fully-closed position toward the intermediate position and/or the intermediate position toward the fully-open position. The sensor 220 detects the change in position of the vehicle part 20, 40 and, thus, the second instance of movement of the vehicle part 20, 40, and communicates the data and/or one or more signal corresponding to the second instance of movement of the vehicle part 20, 40 to the ECU 200. The ECU 200 operates the projection device 60a, 60b to project the second image 80b onto the path of the approaching roadway user to indicate the second extent of movement of the vehicle part 20, 40 to the approaching roadway user and, thus, to warn the approaching roadway user of the actual and/or current extension of the vehicle part 20, 40 into the path of the approaching roadway user while the vehicle part 20, 40 is in the intermediate position and/or the fully-open position.

In this manner, the system 10 is configured to warn the approaching roadway user of an imminent and current obstruction, of the path of the approaching roadway user, by the first vehicle part 20 and/or the second vehicle part 40 extending into the path of the approaching roadway user.

According to examples of the system 10, the system 10 may be provided as follows:
Example 1: A safety system 10 configured for use on a vehicle 100, the safety system 10 including: a projection device 60a, 60b configured to project an image onto a surface surrounding a vehicle 100 to indicate movement of a vehicle part 20, 40 of the vehicle 100; and a control unit 200 configured to operate the projection device 60a, 60b to project a first image 80a indicating a first extent of movement of the vehicle part 20, 40 and a second image 80b indicating a second extent of movement of the vehicle part 20, 40.
Example 2: The safety system 10 according to Example 1, wherein the first extent of movement of the vehicle part 20, 40 corresponds to a maximum extension of the vehicle part 20, 40.
Example 3: The safety system 10 according to any of Examples 1-2, wherein the second extent of movement of the vehicle part 20, 40 corresponds to an actual extension of the vehicle part 20, 40.
Example 4: The safety system 10 according to any of Examples 1-3, wherein the control unit 200 is configured to operate the projection device 60a, 60b to update projection of the second image 80b continuously.
Example 5: The safety system 10 according to any of Examples 1-4, wherein the control unit 200 is configured to operate the projection device 60a, 60b to project the first image 80a upon a detection of a first instance of movement of the vehicle part 20, 40 and to project the second image 80b upon a detection of a second instance of movement of the vehicle part 20, 40.
Example 6: The safety system 10 according to Example 5, wherein the first instance of movement of the vehicle part 20, 40 corresponds to a likelihood of movement of the vehicle part 20, 40 and the second instance of movement of the vehicle part 20, 40 corresponds to a change in position of the vehicle part 20, 40.
Example 7: The safety system 10 according to any of Examples 1-6, wherein the vehicle part 20 is a door of the vehicle 100.
Example 8: The safety system 10 according to Example 7, wherein the first extent of movement and the second extent of movement of the vehicle part 20 correspond to an extension of the vehicle part 20 during one or more of an opening action and a closing action of the vehicle part 20.
Example 9: The safety system 10 according to any of Examples 1-8, wherein the projection device 60a is configured to project the first image 80a and the second image 80b onto a surface located at a side of the vehicle 100.
Example 10: The safety system 10 according to any of Examples 1-9, wherein the projection device 60a is configured to be arranged on a side exterior 120 of the vehicle 100.
Example 11: The safety system 10 according to any of Examples 1-6, wherein the vehicle part 40 is a passenger compartment of the vehicle 100.
Example 12: The safety system 10 according to Example 11, wherein the first extent of movement and the second extent of movement of the vehicle part 40 correspond to an extension of the vehicle part 40 during a tilting action of the vehicle part 40.
Example 13: The safety system 10 according to any of Examples 11-12, wherein the projection device 60b is configured to project the first image 80a and the second image 80b onto a surface located at a front of the vehicle 100.
Example 14: The safety system 10 according to any of Examples 11-13, wherein the projection device 60b is configured to be arranged on a front exterior 140 of the vehicle 100.
Example 15: The safety system 10 according to any of Examples 1-14, wherein the first image 80a includes one or more of a first color and a first pattern and the second image 80b includes one or more of a second color and a second pattern.
Example 16: A vehicle 100 including the safety system 10 according to any of Examples 1-15, the vehicle 100 including a first vehicle part 20 and a second vehicle part 40.
Example 17: The vehicle 100 according to Example 16, wherein the control unit 200 is configured to operate the projection device 60a to project the first image 80a indicating the first extent of movement of the first vehicle part 20 and the second image 80b indicating the second extent of movement of the first vehicle part 20.
Example 18: The vehicle 100 according to any of Examples 16-17, wherein the second vehicle part 40 is configured to tilt in a forward direction.
Example 19: The vehicle 100 according to Example 18, wherein the control unit 200 is configured to operate the projection device 60b to project the first image 80a indicating the first extent of movement of the second vehicle part 40 and the second image 80b indicating the second extent of movement of the second vehicle part 40.
Example 20: A method of indicating movement of a vehicle part 20, 40 of a vehicle 100, the method comprising: providing the safety system 10 according to any of Examples 1-15; projecting the first image 80a indicating the first extent of movement of the vehicle part 20, 40 at a first instance of movement of the vehicle part 20, 40; and projecting the second image 80b indicating the second extent of movement of the vehicle part 20, 40 at a second instance of movement of the vehicle part 20, 40.

Although the present disclosure herein has been described with reference to particular examples, it is to be understood that these examples are merely illustrative of the principles and applications of the present disclosure.

It is intended that the specification and examples be considered as exemplary only, with a true scope of the disclosure being indicated by the following claims.

Additionally, all of the disclosed features of an apparatus may be transposed, alone or in combination, to a method and vice versa.

## Claims

1. A safety system (10) configured for use on a vehicle (100), the safety system comprising:
a projection device (60a, 60b) configured to project an image onto a surface surrounding a vehicle to indicate movement of a vehicle part (20, 40) of the vehicle; and
a control unit (200) configured to operate the projection device to project a first image (80a) indicating a first extent of movement of the vehicle part and a second image (80b) indicating a second extent of movement of the vehicle part.

2. The safety system (10) according to claim 1, wherein the first extent of movement of the vehicle part (20, 40) corresponds to a maximum extension of the vehicle part.

3. The safety system (10) according to any of claims 1-2, wherein the second extent of movement of the vehicle part (20, 40) corresponds to an actual extension of the vehicle part.

4. The safety system (10) according to any of claims 1-3, wherein the control unit (200) is configured to operate the projection device (60a, 60b) to update projection of the second image (80b) continuously.

5. The safety system (10) according to any of claims 1-4, wherein the control unit (200) is configured to operate the projection device (60a, 60b) to project the first image (80a) upon a detection of a first instance of movement of the vehicle part (20, 40) and to project the second image (80b) upon a detection of a second instance of movement of the vehicle part.

6. The safety system (10) according to claim 5, wherein the first instance of movement of the vehicle part (20, 40) corresponds to a likelihood of movement of the vehicle part and the second instance of movement of the vehicle part corresponds to a change in position of the vehicle part.

7. The safety system (10) according to any of claims 1-6, wherein the first extent of movement and the second extent of movement of the vehicle part (20) correspond to an extension of the vehicle part during one or more of an opening action and a closing action of the vehicle part.

8. The safety system (10) according to any of claims 1-7, wherein the projection device (60a) is configured to project the first image (80a) and the second image (80b) onto a surface located at a side of the vehicle (100).

9. The safety system (10) according to any of claims 1-6, wherein the first extent of movement and the second extent of movement of the vehicle part (40) correspond to an extension of the vehicle part during a tilting action of the vehicle part.

10. The safety system (10) according to claim 9, wherein the projection device (60b) is configured to project the first image (80a) and the second image (80b) onto a surface located at a front of the vehicle (100).

11. A vehicle (100) comprising the safety system (10) according to any of claims 1-10, the vehicle including a first vehicle part (20) and a second vehicle part (40).

12. The vehicle (100) according to claim 11, wherein the control unit (200) is configured to operate the projection device (60a) to project the first image (80a) indicating the first extent of movement of the first vehicle part (20) and the second image (80b) indicating the second extent of movement of the first vehicle part.

13. The vehicle (100) according to any of claims 11-12, wherein the second vehicle part (40) is configured to tilt in a forward direction.

14. The vehicle (100) according to claim 13, wherein the control unit (200) is configured to operate the projection device (60b) to project the first image (80a) indicating the first extent of movement of the second vehicle part (40) and the second image (80b) indicating the second extent of movement of the second vehicle part.

15. A method of indicating movement of a vehicle part (20, 40) of a vehicle (100), the method comprising:
providing the safety system (10) according to any of claims 1-10;
projecting the first image (80a) indicating the first extent of movement of the vehicle part at a first instance of movement of the vehicle part; and
projecting the second image (80b) indicating the second extent of movement of the vehicle part at a second instance of movement of the vehicle part.
